# EUROPEAN PATENT APPLICATION

(11) **EP 2 800 330 A1**
(43) Date of publication of application: **05.11.2014**
(21) Application number: 13165775.1
(22) Date of filing: 29.04.2013
(51) Int. Cl.: H04L 29/06

(54) **Secret key management method for multi-network platform**

(71) Applicant: WANIN INTERNATIONAL CO., LTD., Xitun Dist Taichung city 407 (TW)
(72) Inventor: Hsiao, Cheng-hao, Taichung City 408 (TW)
(74) Representative: Chaillot, Geneviève

(57) **Abstract**

The present invention relates to a secret key management method for multi-network platform. When the user logs in any network platform via arbitrary web-browser, the network platform links to the private cloud by Hypertext Transfer Protocol Daemon (HTTPD), and the private cloud shows a timeliness operational parameter on the web-browser for the user inputting personal parameters, and when the user inputs personal parameters within the predetermined time period, the private cloud then generates a pass key; the pass key generated by the private cloud is adapted to cooperate with the pass lock which is generated by the private cloud when the user registered to identify the user, and the identification result is transmitted to the network platform, and the network platform is configured to use the pass lock and pass key to identify the user.

## Description

### BACKGROUND OF THE INVENTION

### 1. FIELD OF THE INVENTION

The present invention relates to a secret key management method for multi-network platform. More particularly, the present invention relates to a electric business system being configured to use web-browser, pass key data transmission network, private cloud and server for secure remote dynamic entry.

### 2. DESCRIPTION OF THE PRIOR ART

Cloud computing technology is previously presented by Amazon, which is a kind of software technology of cloud computing in response to internet shopping platform. After Amazon, Google and Microsoft also developed related technologies. Now the technologies exist in our daily life and related applications expend to make it an essential portion of our life. As rapid development of internet technologies, hardware performance and high speed calculation of web-browsers increase, also the broadband communication is popular. The cloud computing is developed along the track from Modem, Web Server, Web Hosting to Application Service Provider, ASP.

Computing ability is now focused in server side by development of internet, and the server side has greater computing ability. Thus, it is able to generate more and more requirement of WWW and related technologies, and many companies begin to provide internet service or electric business.

In the present invention, electric business is defined as a business activity partially or fully applying digital electric equipment for realizing the business activity. Usually, electric business involves "pass lock flow", "goods flow", and "money flow". Usually goods flow and money flow are too complex to become a bottleneck of the electric business. It is to say that the two issues lead to whether the electric business would success or not. Nowadays electric business has become a popular business activity. Refer to conventional business activity, electric business is advantaged in using web-browser, however, electric business still has to face some problems.

### SUMMARY OF THE INVENTION

The object of the present invention is to provide a secret key management method for multi-network platform, which applies a common pass lock for different type of web-browser to support user activation network platform and the pass lock is configured to assist in identifying the reality of user.

Another object of the present invention is to provide a secret key management method for multi-network platform, in which only the web-browser carrying the correct pass key is able to freely connect to the network platform, and use internet service transaction to access full or partial loading service of the network platform.

The present invention provides a secret key management method for multi-network platform , wherein the multi-network platform is designed for private cloud connection, and the user is able to connect to the platform via arbitrary web-browser through any network platform, wherein the user inputs personal parameters for registration via web-browser, wherein the private cloud is configured to generate a pass lock based on secret key algorithm using personal parameters, and the pass key is adapted for the user to link any network platform by different web-browser, and the private cloud is able to identify the user, the management method comprises steps as followed

When the user logs in any network platform via arbitrary web-browser, the network platform links to the private cloud by Hypertext Transfer Protocol Daemon (HTTPD), and the private cloud shows a timeliness operational parameter on the web-browser for the user inputting personal parameters, and when the user inputs personal parameters within the predetermined time period, the private cloud then generates a pass key.

The pass key generated by the private cloud is adapted to cooperate with the pass lock which is generated by the private cloud when the user registered to identify the user, and the identification result is transmitted to the network platform, and the network platform is configured to use the pass lock and pass key to identify the user.

### BRIEF DESCRIPTION OF THE DRAWINGS

Fig. 1 shows a block diagram of the secret key management method for multi-network platform of the present invention;
Fig. 2 shows a secret key registration flow chart of the multi-network platform; and
Fig. 3 shows a comparison flow chart in the private cloud when the user logs in any network platform by web-browser.

### DETAILED DESCRIPTION OF THE PREFERRED EMBODIMENT

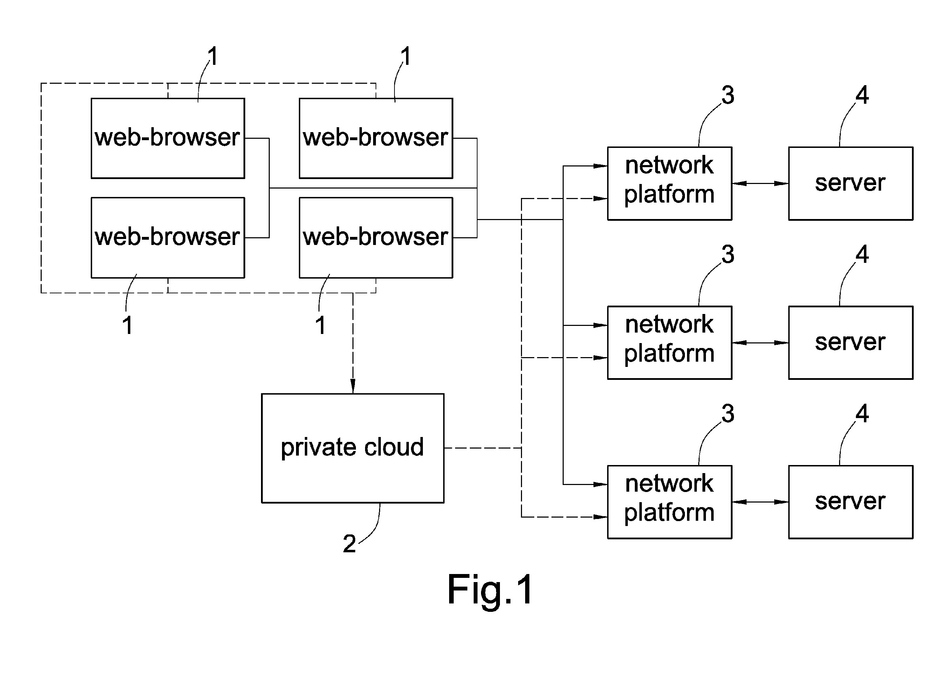

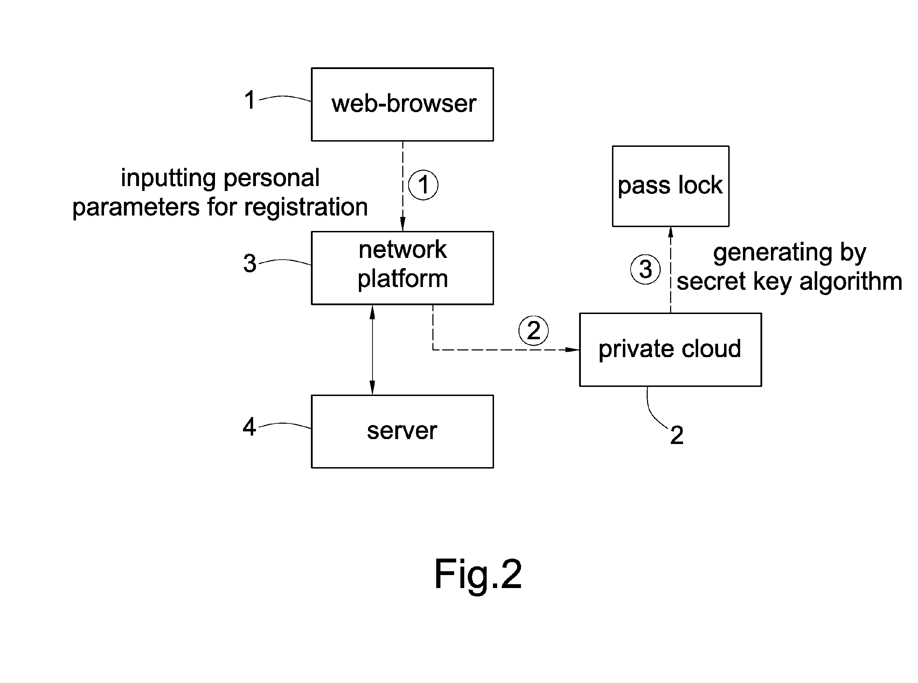

Fig. 1 and Fig. 2 shows the key management method of multi-network platforms 3 provided by the present invention. The user registers by the following steps:
User enters an network platform 3 by a web-browser 1;
A private cloud 2 connects to multi-network platforms 3 and allows the user connect to the private cloud 2 via any network platform 3 by different type of web-browser 1;
The user inputs personal parameters for registration via web-browser 1, wherein the personal parameters comprises a single parameter or a plurality of parameters, or personal data;
The private cloud 2 is configured to generate a pass lock based on secret key algorithm using personal parameters, the private cloud 2 is configured to further use one selected encryption protocol to cooperate with the pass lock for encrypting the pass lock.

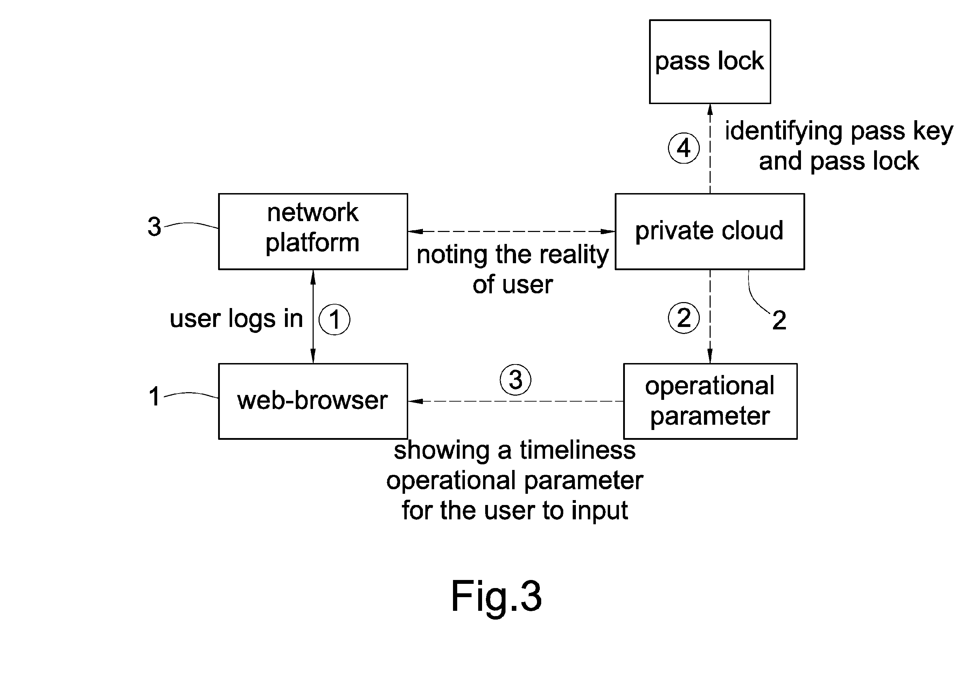

Fig. 3 shows operation flow of the present invention. The pass key is adapted for the user to link any network platform 3 by different web-browser 1, and the private cloud 2 is able to identify the user, the management method comprises steps as followed.

When the user logs in any network platform via arbitrary web-browser 1, the network platform 3 links to the private cloud 2 by Hypertext Transfer Protocol Daemon (HTTPD), and the private cloud 2 shows a timeliness operational parameter on the web-browser 1 for the user inputting personal parameters, and when the user inputs personal parameters within the predetermined time period, the private cloud 2 then generates a pass key.

The pass key generated by the private cloud 2 is adapted to cooperate with the pass lock which is generated by the private cloud 2 when the user registered to identify the user, and the identification result is transmitted to the network platform 3, and the network platform 3 is configured to use the pass lock and pass key to identify the user.

The web-browser 1 is configured to be used to communicate with one or more cooperated network platforms 3 by user's operation via communication interface. The web-browser 1 is able to be configured for dealing internet service. The different type web-browsers 1 are able to apply communication network for using internet service to transmit pass key and application programming interface, API. The web-browser 1 is a mobile web-browser 1 capable of internet connection or mobile data connection.

The pass key is generated in different type according to different web-browser 1, and when the user logs in on different web-browser 1, each web-browser 1 would transmit its pass key to the private cloud 2, and the private cloud 2 is configured to compare the pass key with the pass lock when logging in to identify the user.

The private cloud 2 is connected to the web-browser 1 and network platform 3, which is able to be processed to execute one or more function of web-browser 1 management or service request. When the user registers, the private cloud 2 applies secret key algorithm with personal parameters to generate a pass lock. When the user logs in, the web-browser 1 requests connection with the network platform 3, it is able to receive the inputted personal parameters within the timeliness from the user, and the private cloud 2 instantly generates a pass key.

The network platform 3 allows user from web-browser 1 to log in, and the network platform 3 links to the private cloud 2 by Hypertext Transfer Protocol (HTTP) as internet application program protocol;

The server 4 is connected to the network platform 3. When the web-browser 1 transmits a pass key to the private cloud 2, the private cloud 2 is configured to identify and confirm whether the transmitted pass key and the pass lock generated when the user registered in the private cloud 2 are matched. It is applied in generating, processing, storing, and encrypting the internet service of the web-browser 1 of the private cloud 2.

The private cloud 2 of the present invention is able to connect to different type of web-browser 1. It is able to pass through different type of web-browser 1 cooperating with the private cloud 2 by the single pass key of the user. The web-browser 1 is not allowed to activate the network platform 3 without retrieving the pass lock of the private cloud 2. The server 4 is able to tie the activation network platform 3 in the web-browser 1. Also, the web-browser 1 is not allowed to reach the network platform 3 cooperated with the private cloud 2. Only when the web-browser 1 tied with the user activates the pass key to the private cloud 2, the web-browser 1 with correct pass key is able to connect to the private cloud 2 freely and ignite the user's contains in the private cloud 2. Thus, the pass lock for activating any web-browser 1 is controlled by the private cloud 2 for providing the user all contains of any web-browser 1 that the pass key is able to activate, wherein the pass key is generated by the private cloud 2.

The server 4 is able to connect to a plurality of client's web-browser 1, such as tablet, mobile phone, phone, personal computer and personal digital assistant, via communication network, such as ADSL, WLAN, WAN, internal network, external network, P2P network, internet, or other communication network.

During operation, the user (not shown in figures) is able to mutually execute application program interface of the private cloud 2 on the web-browser 1, thus the user is able to get demanded pass key and/or application program interface. The pass key and/or application program interface may be stored in computer environment of the private cloud 2 and can be transmitted to the web-browser 1 via communication network.

Web-browser 1 is configured to use internet service transaction to access full or partial loading pass key and application program of the private cloud 2. The application program interface is configured to transfer the internet service transaction between the web-browser 1, private cloud 2, and computer environment of server 4 for process and storage. The private cloud 2 is configured to load application program interface, process, and applet for generating, confirming, and transferring internet service, and is able to associate computer environment of server 4, third-party service provider, network attached storage, NAS, and storage area network, SAN, to realize internet service transaction.

As aforementioned, the present invention is novel in technology and advantaged in many effects that the prior arts lack. The present invention conforms to the novelty and non-obviousness of patentability. Please the examiner carefully considering the application of the present invention and allowing the application.

## Claims

1. A secret key management method for multi-network platform, wherein the multi-network platform is designed for private cloud connection, and the user is able to connect to the platform via arbitrary web-browser through any network platform, wherein the user inputs personal parameters for registration via web-browser, wherein the private cloud is configured to generate a pass lock based on secret key algorithm using personal parameters, and the pass key is adapted for the user to link any network platform by different web-browser, and the private cloud is able to identify the user, the management method comprises steps of:
when the user logs in any network platform via arbitrary web-browser, the network platform links to the private cloud by Hypertext Transfer Protocol Daemon (HTTPD), and the private cloud shows a timeliness operational parameter on the web-browser for the user inputting personal parameters, and when the user inputs personal parameters within the predetermined time period, the private cloud then generates a pass key; and
the pass key generated by the private cloud is adapted to cooperate with the pass lock which is generated by the private cloud when the user registered to identify the user, and the identification result is transmitted to the network platform, and the network platform is configured to use the pass lock and pass key to identify the user.

2. The secret key management method for multi-network platform as claimed in claim 1, wherein the pass key is generated in different type according to different web-browser, and when the user logs in on different web-browser, each web-browser would transmit its pass key to the private cloud, and the private cloud is configured to compare the pass key with the pass lock when logging in to identify the user.

3. The secret key management method for multi-network platform as claimed in claim 1, wherein the network platform is configured to be used to communicate with one or more cooperated web-sites by user's operation via communication interface.

4. The secret key management method for multi-network platform as claimed in claim 1, wherein the network platform further comprises a server, when the web-browser transmits a pass key to the private cloud, the private cloud is configured to confirm and determine whether the pass key is complied with the pass lock generated when the user registers in the private cloud, and the private cloud is configured to transmit the comparing result, matching or unmatching, to the server for the server to determine the reality of user.

5. The secret key management method for multi-network platform as claimed in claim 1, wherein the private cloud is configured to set up communication with one or multi web-browsers in different type, and to use pass lock associated with the one or multi web-browsers for identification and confirmation, and after identification and confirmation, the one or multi web-browsers in different type is configured to use different network platform service to deal with the interface request from application program of the web-browser.

6. The secret key management method for multi-network platform as claimed in claim 1, wherein the private cloud is configured to further use one selected encryption protocol to cooperate with the pass lock for encrypting the pass lock.
